# EUROPÄISCHE PATENTSCHRIFT

(11) **EP 3 323 796 B1**
(45) Veröffentlichungstag und Bekanntmachung des Hinweises auf die Patenterteilung: **11.03.2020**
(21) Anmeldenummer: 17177406.0
(22) Anmeldetag: 22.06.2017
(51) Int. Cl.: C07B 57/00, B01F 5/06

(54) **STRÖMUNGSVORRICHTUNG UND VERFAHREN ZUR TRENNUNG CHIRALER MOLEKÜLE ODER TRÄGERSUBSTANZEN**
FLOW DEVICE AND METHOD FOR THE SEPARATION OF CHIRAL MOLECULES OR CARRIER SUBSTANCES
DISPOSITIF D'ÉCOULEMENT POUR LA SÉPARATION DES MOLÉCULES OU SUPPORTS CHIRAUX

(43) Veröffentlichungstag der Anmeldung: 23.05.2018
(73) Patentinhaber: Universität Augsburg, 86159 Augsburg (DE)
(72) Erfinder: Wixforth, Achim, 86159 Augsburg (DE); Paschke, Benjamin, 86159 Augsburg (DE)
(74) Vertreter: Mollekopf, Gerd Willi

(56) Entgegenhaltungen:
- MARCIN KOSTUR ET AL: "Chiral separation in microflows", ARXIV.ORG, CORNELL UNIVERSITY LIBRARY, 201 OLIN LIBRARY CORNELL UNIVERSITY ITHACA, NY 14853, 3. Juni 2005 (2005-06-03), XP080196410, DOI: 10.1103/PHYSREVLETT.96.014502
- GEORG NICKERL ET AL: "Chiral Metal-Organic Frameworks and Their Application in Asymmetric Catalysis and Stereoselective Separation", CHEMIE INGENIEUR TECHNIK., Bd. 83, Nr. 1-2, 1. Januar 2011 (2011-01-01), Seiten 90-103, XP055397440, WEINHEIM; DE ISSN: 0009-286X, DOI: 10.1002/cite.201000188

## Beschreibung

Die Erfindung betrifft eine Strömungsvorrichtung und ein Verfahren zur Trennung von zwei Enantiomeren (Paaren von chiralen Molekülen bzw. Substanzen oder chiralen Trägersubstanzen).

Die Trennung von Enantiomeren bzw. von racemischen Gemischen ist ein sehr wichtiger Schritt zum Beispiel bei der Herstellung von landwirtschaftlichen und pharmazeutischen Produkten. Die zwei verschiedenen Enantiomere (die Moleküle mit unterschiedlicher Chiralität) können nämlich eine komplett unterschiedliche Wirkung auf einen biochemischen oder physiologischen Prozess haben. Beispielsweise hat nur das eine Enantiomer die gewünschte Wirkung als pharmazeutischer Wirkstoff, während das andere Enantiomer mit seiner möglicherweise unerwünschten - bis hin zur toxischen - Wirkung auszuschließen ist. In den meisten Fällen ist es nicht möglich, spezifisch eines der zwei Enantiomere zu synthetisieren. Normalerweise ergibt sich aus der chemischen Synthese eine 50:50 Mischung der zwei Enantiomere (racemisches Gemisch).

Es sind mehrere Methoden entwickelt worden mit dem Ziel, die zwei Enantiomere effizient zu trennen. Die am häufigsten verwendeten Trennungsmethoden sind die Säulen- und die Kristallisationschromatographie. Im Bereich der Säulenchromatographie müssen verschiedene Parameter (Lösungsmittel, Temperatur, usw.) für jedes Paar von chiralen Molekülen optimiert werden, was diese Methode sehr aufwendig und teuer macht. In der Kristallisationschromatographie wird ein Überschuss vom gewünschten Enantiomer schrittweise und künstlich zu dem racemischen Gemisch hinzugefugt, was viel Zeit und Energie verlangt.

Z. Guttenberg, P. Talkner et al. stellen in "Flow profiling of a Surface Acoustic wave nanopump", Physical Review E 70, 0563 1 1 (2004), eine Strömungsvorrichtung vor, bei der mittels eines Interdigitalen Transducers (IDT = Interdigital Transducer) Oberflächenwellen auf einer Oberfläche eines piezoelektrischen Trägersubstrats induziert werden, die wiederum bei einer Flüssigkeitsschicht auf der Substratoberfläche eine sog. Quadrupol-Strömungsstruktur hervorrufen.

M. Kostur, P. Hänggi et al. beschreiben in "Chiral separation in microflows", Physical Review Letters, Vol. 96, No. 1, pp. 14 (2006), mittels eines theoretischen Modells ein Strömungsmuster in einer Flüssigkeit unter Verwendung der oben genannten Nano-Pumpe, durch das zwei Enantiomere eines chiralen Moleküls in Abhängigkeit von deren Chiralität und dem Drehsinn der sich bildenden Strömung separiert werden. Aufgrund der geringen Abmessungen der Moleküle spielt die (Rück-)Durchmischung der beiden Enantiomere aufgrund der thermischen Molekülbewegung eine erhebliche Rolle, so dass die Effizienz oder Reinheit der Separation beschränkt ist.

Aus G. Zhi-Gang, C. Woell et al. "Chiral Porous Metacrystals: Employing Liquid-phase Epitaxy to Assemble Enantiopure Metal-organic Nanoclusters into Molecular Framework Pores", ACS Nano 10, 977 (2016) und P. Schmieder, D. Volkmer et al. "CFA-1: the first chiral metal-organic framework containing Kuratowski-type secondary building units", Dalton Transactions (Cambridge, England: 2003), Vol. 42, No. 30, pp. 10786-97 (2013), ist die Herstellung von chiralen Kristallen bekannt (z.B. sog. Metall Organic Frameworks). Siehe auch G. Nickerl, S. Kaskel et al. "Chiral Metal-Organic Frameworks and Their Application in Asymmetric Catalysis and Stereoselective Separation", Chemie Ingenieur-Technik, 83, No 1-2, 90-103 (2011).

Es ist Aufgabe der Erfindung, eine Strömungsvorrichtung und ein Verfahren unter Verwendung der Strömungsvorrichtung sowie Trägerelemente vorzusehen, bei denen die Effizienz der Trennung von chiralen Molekülen oder chiralen Trägerelementen in deren einzelne Enantiomere verbessert ist.

Diese Aufgabe wird mit den Merkmalen des Anspruchs 1, 10 bzw. 12 gelöst. Vorteilhafte Ausgestaltungen sind Gegenstand von Unteransprüchen.

Gemäß Anspruch 1 ist eine Strömungsvorrichtung für Fluidströmungen zur Trennung von chiralen Substanzen oder chiralen Trägerelementen vorgesehen. Die Strömungsvorrichtung weist auf: zumindest eine rechtsdrehende Strömungseinrichtung mit rechtsdrehender Fluid-Strömung; zumindest eine linksdrehende Strömungseinrichtung mit linksdrehender Fluid-Strömung; und eine Fluidfördereinrichtung, die dazu ausgebildet ist, in der zumindest einen linksdrehenden Strömungseinrichtung die linksdrehende Strömung zu induzieren und in der zumindest einen rechtsdrehenden Strömungseinrichtungen die rechtsdrehende Strömung zu induzieren.

Die Strömungsvorrichtung weist zumindest ein erstes Strömungsleitelement auf, um einen Teil der von der Fluidfördereinrichtung induzierten Fluid-Strömung in eine rechtsdrehende Fluid-Strömung in der zumindest einen rechtsdrehenden Strömungseinrichtung zu überführen. Weiter weist die Strömungsvorrichtung zumindest ein zweites Strömungsleitelement auf, um einen Teil der von der Fluidfördereinrichtung induzierten Fluid-Strömung in eine linksdrehende Fluid-Strömung in der zumindest einen linksdrehenden Strömungseinrichtung zu überführen.

Chirale Substanzen sind vorzugsweise chirale Moleküle und/oder pharmazeutisch wirksame Substanzen mit einer Chiralität.

Hierin wirken die 'Trägerelemente' ganz allgemein als Fängerstrukturen die in einem Bindungsschritt einen oder mehrere chirale Moleküle mit einer der Chiralitäten ausschließlich oder zumindest überwiegend binden.

Die Strömungsvorrichtung teilt eine induzierte Strömung in links- und rechtsdrehende Fluid-Strömungen auf. Vorzugsweise wird die induzierte Strömung so aufgeteilt, dass in jeder der Strömungseinrichtungen eine gleich hohe Strömungsrate eingestellt ist.

Durch das/die Strömungsleitelement(e) werden Wirbelaugen und/oder Randzonen ausgeblendet, in denen sich chirale Substanzen oder Trägerelemente anreichern, ohne am Trennungsprozess weiter teilzunehmen. In den Wirbelaugen oder Randzonen liegen 'tote' (strömungsfreie) oder gar gegenläufig strömende Strömungsbereiche vor, in denen die chiralen Moleküle oder die chiralen Trägerelemente gefangen sind, ohne weiter am Trennungsprozess teilzunehmen. Mittels des/der Strömungsleitelement(e) werden die Randzonen und/oder Wirbelaugen komplett eliminiert oder diese werden bezüglich des Träger-Fluids als flache Zonen ausgebildet, so dass in diesen Zonen ein geringer bis sehr geringer Anteil des Träger-Fluids vorhanden ist.

Als "Träger-Fluid" wird hierin dasjenige Fluid bezeichnet, das der Träger oder Haupttransporteur der Trägerelemente oder der chiralen Substanz ist.

Vorzugsweise wird durch die Fluidfördereinrichtung das Träger-Fluid gefördert. Alternativ oder zusätzlich wird die Strömung des Träger-Fluids dadurch induziert, dass das oder ein Komplementär-Fluid durch die Fluidfördereinrichtung gefördert wird, welches durch seine Strömung einen Strömungs-Impuls auf das Träger-Fluid überträgt.

Gemäß einer vorteilhaften Ausgestaltung ist die zumindest eine rechtsdrehende Strömungseinrichtung
- als Strömungskanal ausgebildet, und/oder
- weist eine erste äußere Strömungsleiteinrichtung auf, die die rechtsdrehende Fluid-Strömung der rechtsdrehenden Strömungseinrichtung an deren Außenseite begrenzt, und/oder
- weist eine erste innere Strömungsleiteinrichtung auf, die die rechtsdrehende Fluid-Strömung der rechtsdrehenden Strömungseinrichtung an deren Innenseite begrenzt. Weiterhin ist die zumindest eine linksdrehende Strömungseinrichtung
- als Strömungskanal ausgebildet, und/oder
- weist eine zweite äußere Strömungsleiteinrichtung auf, die die linksdrehende Fluid-Strömung der linksdrehenden Strömungseinrichtung an deren Außenseite begrenzt, und/oder
- weist eine zweite innere Strömungsleiteinrichtung auf, die die linksdrehende Fluid-Strömung der linksdrehenden Strömungseinrichtung an deren Innenseite begrenzt.

Durch die äußere und/oder innere Beschränkung des Fluidraums auf die möglichst gleichmäßig durchströmten Bereiche der Fluid-Strömung werden Bereiche im Fluidvolumen ausgegrenzt, in denen keine oder nur geringe Strömungen induziert werden. In diesen sog. Totzonen können sich chirale Substanzen oder chirale Trägerelemente ablagern oder anreichern, die nicht oder nicht ausreichend separiert wurden. Dadurch würde sich die Effizienz der Trennung erheblich vermindern.

Vorteilhaft weist die Strömungsvorrichtung vier Strömungseinrichtungen auf, wovon zwei Strömungseinrichtungen linksdrehende Fluidströmungen und zwei Strömungseinrichtungen rechtsdrehende Fluidströmungen ausbilden. Insbesondere sind die vier Strömungseinrichtungen in Quadranten-Struktur oder Kleeblattförmig angeordnet. Vorzugsweise ist die Vierquadranten-Struktur Kleeblattförmig, wobei vorzugsweise von oben gesehen und im Umlaufsinn die Fluidströmungen alternierend rechts- und linksdrehend sind. Die Kleeblatt-Form der Strömungsvorrichtung ist in Ausgestaltung so gebildet, dass der äußere Rand einem Rand eines vierblättrigen Kleeblatts ähnelt und der Innenbereich jedes Kleeblatts ausgenommen ist.

Gemäß einer Ausgestaltung sind die rechts- und linksdrehende Strömungseinrichtung(en) aus einem haftungs- und/oder reibvermindernden Material ausgebildet oder mit einer haftungs- und/oder reibvermindernden Material beschichtet, so dass das Fluid und/oder die chiralen Trägerelemente oder die chirale Substanze eine verminderte Reibung bzw. Haftung erfahren. Beispielsweise sind die Strömungseinrichtungen aus Teflon ausgebildet oder mit einer Teflonschicht beschichtet.

Der Begriff "haftungsvermindert" schließt hydrophobes Material mit ein. Beispielsweise sind Teflon oder eine Nanopartikel-Beschichtung hydrophob für Wasser oder eine andere Dipolflüssigkeit als Träger-Fluid.

Vorteilhaft weist die Fluidfördereinrichtung ein oder mehrere der folgenden Elemente auf: einen Transducer, insbesondere einen interdigitalen Transducer, eine Fluidpumpe, eine Umwälzpumpe, eine Membranpumpe, und ein Rührerelement.

Vorzugsweise ist die Induktion der Strömung, die Strömungsausrichtung und die Strömungsgeschwindigkeit des durch die Fluidfördereinrichtung geförderten Fluids derart, dass sich in den Strömungseinrichtungen eine laminare und kontinuierliche Strömung einstellt. Vorzugsweise ist die Reynoldszahl der Strömung klein und es entstehen keine Turbulenzen - abgesehen von den beabsichtigten links- und rechtsdrehenden Strömungen in der jeweiligen Strömungseinrichtung. Vorzugsweise ist die Reynoldszahl kleiner als 2300 oder liegt im Bereich von 100 bis 1000 oder 800 bis 2000.

In Ausgestaltung ist der Transducer auf einem piezoelektrischen Trägersubstrat aufgebracht, welches selbst wieder einen kleinen Bodenbereich innerhalb der Strömungseinrichtungen bildet. Dabei ist die Strömungsvorrichtung auf bzw. in einem Substrat angeordnet und das die Fördereinrichtung tragende Trägersubstrat ist am Boden des Substrats angeordnet.

Gemäß einer Ausgestaltung ist die zumindest eine Strömungsvorrichtung zumindest teilweise mit einem Fluid gefüllt, wobei in dem Fluid eine Vielzahl von chiralen Trägerelementen oder Substanzen vorhanden ist. Die 'Vielzahl' von chiralen Trägerelementen oder Substanzen kann als chirales Gemisch vorliegen. Hierin ist ein chirales Gemisch ein Gemisch aus chiralen Trägerelementen oder chiralen Substanzen aus Vertretern beider oder aller Chiralitäten. Das Gemisch aus gleichen Trägerelementen oder Substanzen (z.B. Molekülen), die sich in der Chiralität unterscheiden (alles 'gleich' bis auf die Chiralität), kann eine racemische Mischung sein, bei der die Trägerelement oder Substanzen der unterschiedlichen Chiralität in gleicher Anzahl bzw. Menge vorliegen. Bei zwei unterschiedlichen Chiralitäten ist bei einer racemischen Mischung das Verhältnis der Anzahl bzw. Menge 50:50. Hierin werden aber generell und im nicht-sortierten bzw. ursprünglichen Zustand chirale Mischungen berücksichtigt, bei denen die Mischung der verschieden chiralen Trägerelemente oder Substanzen bzw. Moleküle derart ist, dass das Verhältnis der Menge/Anzahl der Trägerelemente oder Substanzen (Moleküle) der verschiedenen Chiralitäten nicht 50:50 sein muss. Beispielsweise kann sich bei der chiralen Mischung herstellungsbedingt ein Verhältnis der zwei unterschiedlichen Chiralitäten von 45:55 ergeben. Bei Vorhandensein von 4 verschiedenen Chiralitäten könnte in der chiralen Mischung ein Verhältnis von 23:27:21:29 vorliegen.

Eine Vielzahl von chiralen Trägerelementen und chiralen Substanzen kann als teilseparierte Gruppe von Vertretern der einen und der komplementären Chiralität vorliegen, wobei die eine Gruppe überwiegend in der oder den rechtsdrehenden Strömungseinrichtung(en) und die komplementäre Gruppe überwiegend in der oder den linksdrehenden Strömungseinrichtung(en) vorliegt - besonders nachdem die Fluid-Strömung eine vorgegebene Dauer geströmt ist.

Vorteilhaft ist in der Strömungsvorrichtung ein Fluid derart eingefüllt, dass das Fluid eine Grenzfläche zu einem angrenzenden Fluid ausbildet. Weiter vorteilhaft sind die chiralen Substanzen oder die chiralen Trägerelemente und das Fluid so aufeinander abgestimmt, dass sich die chiralen Substanzen oder die chiralen Trägerelemente an der Grenzfläche des Fluids zum angrenzenden Fluid aufhalten.

Die Grenzfläche bildet einen Symmetriebruch für die chiralen Moleküle oder die chiralen Trägerelemente aus. D.h. sobald oder soweit sich die Moleküle oder Trägerelemente an der Grenzfläche aufhalten, ergibt sich eine räumliche Orientierung in Abhängigkeit der Chiralität. Diese Ausbildung der Orientierung ergibt sich nicht, wenn die chiralen Moleküle oder die chiralen Trägerelemente gleichförmig bzw. allseits gleichmäßig von dem Träger-Fluid umgeben sind. Eine Grenzfläche ist ebenfalls zwischen dem Fluid und den (Festkörper-)Oberflächen der Strömungsvorrichtung (insbesondere zwischen dem Boden der Strömungsvorrichtung und dem Fluid) vorhanden, die ebenfalls einen Symmetriebruch darstellt, der zur Selektion der chiralen Moleküle oder Trägerelemente führt. Alternativ oder zusätzlich zur Trennung an der Grenzfläche Fluid/Fluid kann daher die Trennung an der Grenzfläche Fluid/Festkörperoberfläche genutzt werden. Da die separierten Moleküle oder Trägerelement von der Oberfläche des Fluids zum anderen Fluid (vorzugsweise Gas oder Luft) leichter und unter weniger Störung des Strömungssystems entnommen werden können als z.B. vom Boden der oder eines Strömungsleitelemente, ist die Entnahme von der ersten Grenzfläche bevorzugt.

In der Strömungsvorrichtung sind die links- und rechtsdrehenden Strömungseinrichtungen mit dem Fluid (das 'Träger-Fluid') gefüllt. Die Grenzfläche des (Träger-)Fluids ist zu einem gasförmigen oder einem flüssigen Fluid ausgebildet. Vorzugsweise ist das Träger-Fluid eine Flüssigkeit und das angrenzende Fluid hat eine geringere Dichte als das Träger-Fluid und mischt sich nicht mit dem Träger-Fluid. Folglich "schwimmen" die chiralen Moleküle oder die chiralen Trägerelemente auf dem Träger-Fluid.

Gemäß einem Aspekt der Erfindung ist ein Substrat mit einem oder einer Vielzahl von in und/oder auf dem Substrat angeordneten Strömungsvorrichtungen nach einem der vorhergehenden oder nachfolgenden Ausgestaltungen vorgesehen. Eine 'Vielzahl' sind beispielsweise zwei, drei, vier, fünf, sechs, mehr als sechs, neun, sechzehn, 25 oder 64 Strömungsvorrichtungen. Vorteilhaft ist das Substrat als Consumable ausgebildet, bei dem das Substrat nach dessen Verwendung entsorgt wird. Das Substrat kann auch als 'Chip' bezeichnet werden.

Gemäß einem weiteren Aspekt der Erfindung sind auf und/oder in dem Substrat zwei Strömungsvorrichtungen fluidisch in Reihe geschaltet. Durch die Reihenschaltung wird von Strömungsvorrichtung zu Strömungsvorrichtung der Grad der Sortenreinheit der chiralen Trägerelemente oder chiralen Substanzen mit der jeweiligen Chiralität erhöht. Zumindest derjenigen Chiralität entsprechend der angereicherten Trägerelemente oder Substanzen aus der vorhergehenden Strömungsvorrichtung. Die Separierung und Erhöhung des Reinheitsgrads der chiralen Trägerelemente oder der chiralen Substanzen erfolgt ähnlich der Isotopenanreicherung bei Uran mittels UF₆ und den Ultrazentrifugen.

Vorteilhaft sind die mehreren Strömungsvorrichtungen so verbunden, dass das Fluid (mit den darin befindlichen chiralen Trägerelementen oder chiralen Substanzen) aus einer der links- oder rechtsdrehenden Strömungseinrichtung entnommen wird. Die Einleitung des aus der vorgeschalteten Strömungsvorrichtung entnommenen Fluids erfolgt vorzugsweise in die oder eine komplementäre Strömungseinrichtung der nachgeschalteten Strömungsvorrichtung oder in die gemischte Fluidströmung der nachgeschalteten Strömungsvorrichtung. Alternativ erfolgt die Einspeisung in die gleichdrehende Strömungseinrichtung der nachgeschalteten Strömungsvorrichtung.

In Ausgestaltung können mehr als zwei Strömungsvorrichtungen fluidisch in Reihe geschaltet sein. Beispielsweise wird Fluid (mit den dort befindlichen chiralen Trägerelementen oder chiralen Substanzen) aus der oder einer der linksdrehenden (rechtsdrehenden) Strömungseinrichtung der ersten Strömungseinrichtung entnommen und in die (mit der ersten Strömungsvorrichtung fluidisch verbundenen) zweite Strömungseinrichtung eingespeist. Aus der linksdrehenden (rechtsdrehenden) Strömungseinrichtung der zweiten Strömungseinrichtung wird Fluid (mit den dort befindlichen chiralen Trägerelementen oder chiralen Substanzen) entnommen und in die (mit der zweiten Strömungsvorrichtung fluidisch verbundenen) dritte Strömungseinrichtung eingespeist.

Gemäß einem Aspekt der Erfindung sind chirale Trägerelemente vorgesehen, insbesondere chirale Trägerelemente zur Verwendung bei einer Strömungsvorrichtung oder einem Substrat nach einem der vorhergehenden oder nachfolgenden Ausgestaltungen, wobei die chiralen Trägerelemente mit einem Anpassungsmittel gefüllt, getränkt oder imprägniert sind.

In Ausgestaltung sind die Trägerelemente mit einem Anpassungsmittel getränkt oder imprägniert. Das Anpassungsmittel passt die Dichte und/oder die hydrophile oder hydrophobe Eigenschaft der Trägerelemente so an, dass diese (zumindest ein großer Teil der Trägerelemente) sich an der Grenzfläche des (Träger-)Fluids zu dem anderen Fluid oder der Festkörperoberfläche aufhalten. Das Anpassungsmittel kann auch als Ballastmittel (Erhöht mittlere Dichte von Trägerelement und Ballastmittel gegenüber Dichte von Trägerelement) oder Auftriebsmittel (Verringert die mittlere Dichte von Trägerelement und Auftriebsmittel gegenüber der Dichte des Trägerelements an sich) bezeichnet werden.

Das Anpassungsmittel für die Trägerelemente ist beispielsweise n-Heptan oder n-Pentan. Das Anpassungsmittel kann beispielsweise als Flüssigkeit auf die (trockenen) Trägerelemente aufgebracht werden und/oder im Vakuum von den Trägerelementen entfernt werden (beispielsweise aufgrund des Dampfdrucks werden n-Heptan oder n-Pentan entfernt).

Allgemein hierin sind chirale Trägerelemente beispielsweise chirale Kristalle oder chirale metallorganische Gerüstverbindungen (MOFs = Metal Organic Frameworks), die Chiralität aufweisen. Beispielsweise ist die mittlere Abmessung eines Trägerelements bei 20 µm, was zu einer wesentlich besseren Separation der Trägerelemente im Vergleich zu etwa nur nm-großen chiralen Molekülen führt (aufgrund der erheblich reduzierten thermischen Bewegungen im Träger-Fluid).

Ein weiteres Beispiel für chirale Trägerelemente sind maßgeschneiderte DNA-Nanoelemente (designed DNA Nano Devices), die eine Chiralität aufweisen und mit der Herstellung als racemisches Gemisch vorliegen. Vgl. S. Surana et al., "Designing DNA nanodevices for compatibility with the immune system of higher organisms", Nature Nanotechnology, Vol. 10 (Sept. 2015) / DNA Origami.

Ganz besonders vorteilhaft weisen die chiralen Trägerelemente die Eigenschaft auf, dass diese in Abhängigkeit der eigenen Chiralität chirale Moleküle mit einer gepaarten Chiralität an sich binden. D.h. Trägerelemente der ersten Gruppe der Chiralität binden ausschließlich oder zumindest überwiegend chirale Moleküle der ersten Chiralität an sich und Trägerelemente der anderen, komplementären Gruppe der Chiralität binden ausschließlich oder zumindest überwiegend chirale Moleküle der anderen komplementären Chiralität an sich. Die 'Korrespondenz' in der Chiralität erfolgt beispielsweise so, dass nur oder überwiegend nur linksdrehende Moleküle an linksdrehende (oder rechtsdrehende) Trägerelemente andocken, während nur oder überwiegend nur linksdrehende Moleküle an linksdrehende (oder rechtsdrehende) Trägerelemente andocken.

Gemäß einem Aspekt der Erfindung sind chirale Trägerelemente vorgesehen zur Verwendung bei einer Strömungsvorrichtung oder einem Substrat nach einem der vorhergehenden oder nachfolgenden Ausgestaltung. An den chiralen Trägerelementen sind chirale Moleküle gebunden und die Chiralität der Moleküle korrespondiert zur Chiralität der Trägerelemente (gleiche oder gegengleiche Korrespondenz). Die 'Bindung' der chiralen Moleküle (oder allgemein hierin der chiralen Substanzen) an die chiralen Trägerelemente kann eine beliebige Bindung oder Anhaftung sein. Beispielsweise eine oder mehrere von: eine chemische Bindung, eine van der Waals-Bindung, eine Ionenbindung, eine Wasserstoff-Brückenbindung und eine kovalente Bindung.

In Ausgestaltung dient die Paarung von separiertem chiralen Trägerelement mit dem korrespondierenden, daran gebundenen chiralen Molekül als wirksame Substanz zur pharmazeutischen Verabreichung. D.h. in diesem Fall muss das mit dem Trägerelement separierte chirale Molekül nicht vom Trägerelement gelöst werden, um zur Verwendung oder Applikation zu kommen.

Gemäß Anspruch 12 ist ein Verfahren zur Trennung von chiralen Substanzen unter Verwendung von chiralen Trägerelementen vorgesehen. Das Verfahren weist die Schritte auf: Bereitstellen eines chiralen (z.B. racemischen) Gemischs von Trägerelementen; Separieren des chiralen Gemischs von Trägerelementen in einer Strömungsvorrichtung, die links- und rechtsdrehende Fluid-Strömungen ausbildet oder in einer Strömungsvorrichtung wie oben oder unten weiter beschrieben; Entnahme von Trägerelementen aus der Strömungsvorrichtung aus der oder einer der links- oder rechtsdrehenden Fluid-Strömungen; und Bereitstellen von chiralen Substanzen mit einer ausgewählten Chiralität gepaart zu der Chiralität der aus der Strömungsvorrichtung entnommenen Trägerelemente. Ein chirales Gemisch an chiralen Substanzen wird auf die Trägerelemente appliziert und die chirale Substanz bindet sich an die Trägerelemente mit einer Chiralität, die zur Chiralität der Trägerelemente gepaart ist (gleichsinnige oder gegensinnige Chiralität).

Das Applizieren der chiralen Substanz auf die Trägerelemente erfolgt,
entweder (a) (Schritt 106) während die Trägerelemente als chirales (z.B. racemisches) Gemisch vorliegen und vor dem Schritt des Separierens,
oder (b) (Schritt 120) nachdem das chirale Gemisch an Trägerelementen separiert wurde und die separierten Trägerelemente aus der Strömungsvorrichtung entnommen wurden.

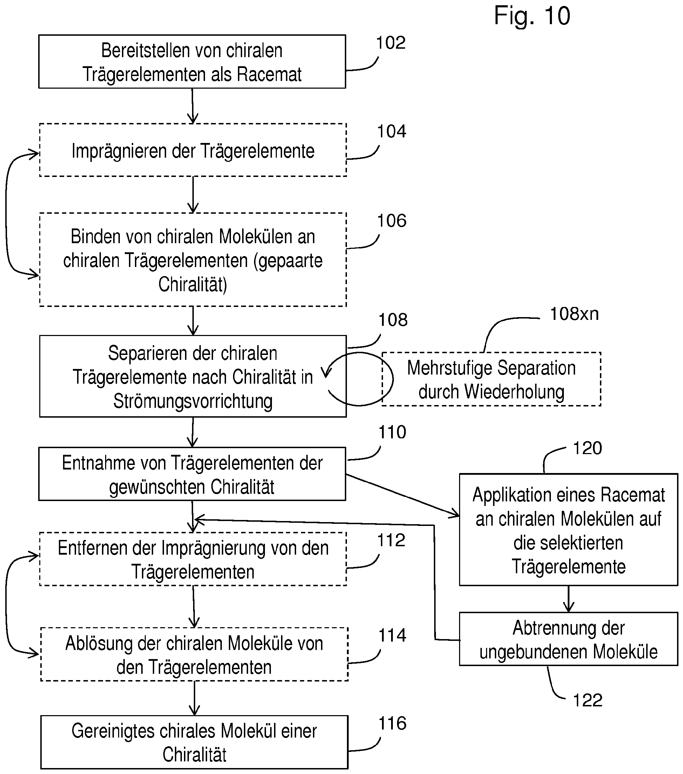

Ausgestaltungen und weitere Details des bzw. der Verfahren sind zur nachfolgend beschriebenen Figur 10 sowie an vielen Stellen der Beschreibung zu entnehmen. Kombinationen oder Unterkombinationen der beschriebenen Verfahren sind bei dem beanspruchten Verfahren von Anspruch 12 ohne weiteres anwendbar.

Das erfindungsgemäße Verfahren und die Verwendung der Strömungsvorrichtung sind aufgrund niedrigerer Kosten und einer schnelleren Ausführbarkeit vorteilhaft. In Ausgestaltung und bei wiederholter Trennung nach Separation des (angereicherten) gewünschten Enantiomers oder durch in-Reihe-Schaltung der Strömungsvorrichtungen erhöht sich die Trennungseffizienz, so dass schließlich eine hohe Reinheit des gewünschten Enantiomers (gewünschtes chirales Molekül) bzw. des chiralen Trägerelements vorliegt.

Anhand von Figuren werden Ausführungsformen der Erfindung näher erläutert. Es zeigen:
- Fig. 1: ein theoretisch berechnetes Strömungsmuster induziert durch einen Interdigitalen Transducer in einem unbegrenzten Flüssigkeitsfilm,
- Fig. 2: eine Vierquadranten-Strömungsvorrichtung mit inneren und äußeren Flüssigkeitsbegrenzern,
- Fig. 3: die Strömungsvorrichtung von Fig. 2 im Querschnitt,
- Fig. 4: die Rückseitenansicht eines Interdigitalen Transducers zur Erzeugung von Oberflächenwellen,
- Fig. 5: eine weitere Ausgestaltung einer Vierquadranten-Strömungsvorrichtung,
- Fig. 6: eine weitere Ausgestaltung einer Zweiquadranten-Strömungsvorrichtung,
- Fig. 7: eine Strömungsvorrichtung, bei der zwei Vierquadranten-Strömungsvorrichtungen in Reihe geschaltet sind,
- Fig. 8: eine weitere Ausgestaltung einer Vierquadranten-Strömungsvorrichtung, bei der die Fluidwirbel mittels zirkulierenden Fluids induziert werden,
- Fig. 9: eine Seiten-Schnittansicht der Strömungsvorrichtung von Fig. 8 im Bereich des Auslasses für die zirkulierte Flüssigkeit, und
- Fig. 10: ein Ablaufdiagramm, das zwei Verfahren und Ausgestaltungen zur Anreicherung von chiralen Molekülen unter Verwendung von chiralen Trägerelementen veranschaulicht.

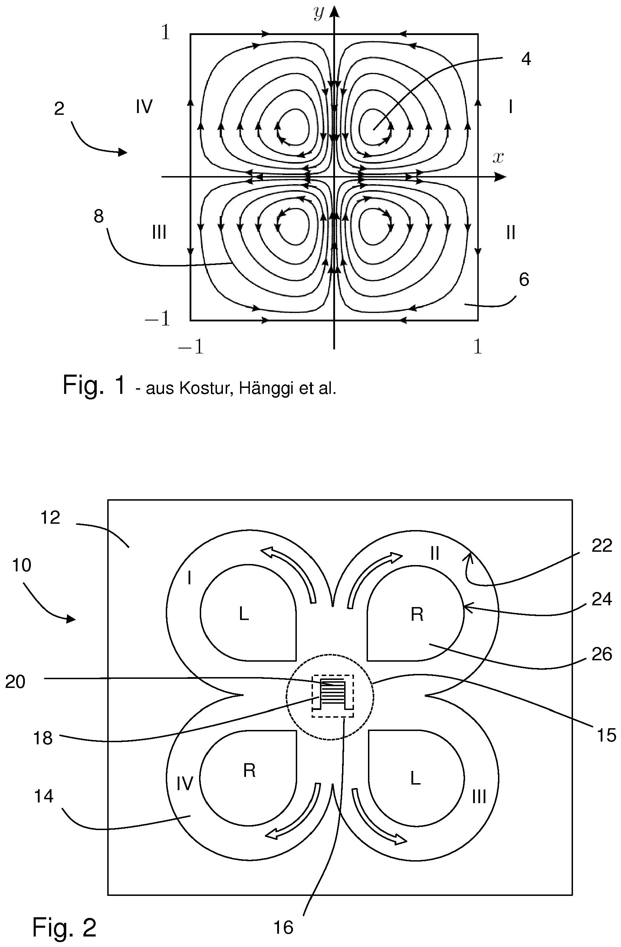

Fig. 1 gibt die Figur 2 aus dem Paper von M. Kostur, P. Hänggi et al. "Chiral separation in microflows", Physical Review Letters, Vol. 96, No. 1, pp. 14 (2006) wieder. Darin ist das theoretisch berechnete Strömungsmuster dargestellt, das nach einer Einschwingzeit bzw. nach Erreichen des stationären Zustands resultiert, wenn ein Interdigitaler Transducer in einem unbegrenzten Flüssigkeitsfilm oberhalb des Transducers eine Strömung induziert. Im stationären Zustand bildet die Strömung ein sog. Vierquadranten-Strömungsmuster aus, bei dem in den Quadranten I und III die Fluidströmung linksdrehend ist und in den Quadranten II und IV die Fluidströmung rechtsdrehend ist. In der Darstellung sind die modellierten, geschlossenen Strömungswirbel durch die Pfeile 8 dargestellt, wobei die höhere Dichte der Pfeile eine höhere Strömungsgeschwindigkeit und umgekehrt veranschaulichen. Weiter wird in dem Paper beschrieben, wie sich die einstellenden Wirbel zur Separierung von chiralen Molekülen nutzen lässt (Enantiomer-Trennung).

Es wurde festgestellt, dass die bekannte Enantiomer-Trennung keine hohe Sorten- bzw. Chiralitätsreinheit der getrennten chiralen Moleküle zur Folge hat. Zum einen liegt dies am hohen Größenunterschied zwischen der Größe der chiralen Moleküle und dem Durchmesser der erzeugten Wirbel. Dabei wirkt die thermische Bewegung der Moleküle in dem Fluid dem Trennungsvorgang entgegen. Zum anderen wurde festgestellt, dass sich nicht-separierte Moleküle (also Moleküle, die nicht zu der Chiralität der jeweiligen rechts- oder linksdrehenden Strömung korrespondieren) in Strömungsbereichen der Wirbel ablagern, in denen die Strömung null oder nur gering ist. In Fig. 1 sind diese Zonen gekennzeichnet als die innere Totzone 4 entsprechend dem Wirbelauge und die äußere Totzone 6, in der die Strömungsgeschwindigkeit gering ist.

Daher schlägt die vorliegende Erfindung Maßnahmen zur Erhöhung der Separierungseffizienz vor, wobei:
- zum einen die Größe der Chiralen Moleküle künstlich mit Hilfe von chiralen Trägerelementen vergrößert wird, deren Separierungseffizienz erhöht ist (z.B. weil der Einfluss der thermischen Bewegung drastisch gegenüber derjenigen von Molekülen reduziert ist), und/oder
- eine Strömungsvorrichtung vorgesehen ist, bei der die Ausbildung oder das Volumen von Totzonen deutlich reduziert oder ganz eliminiert ist.

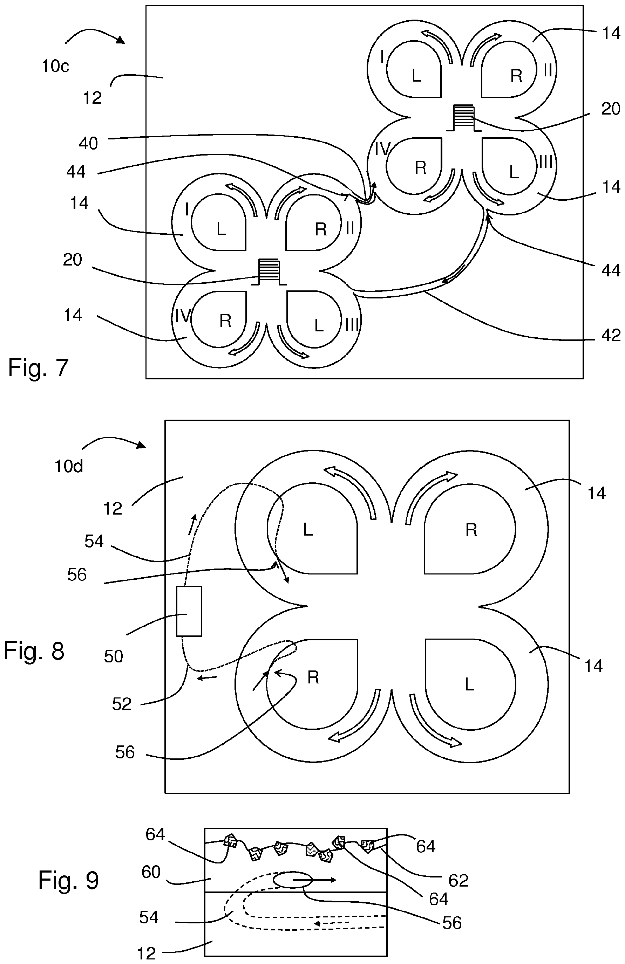

Fig. 2 zeigt eine Vierquadranten-Strömungsvorrichtung, bei der in einem Substrat 12 die Fluidkanäle als Vertiefungen im Substrat ausgebildet sind. Die Strömungskanäle werden gebildet durch Strömungsschleifen 14, die einen sich überschneidenden Bereich 15 aufweisen, der in Fig. 2 durch die punktierte Linie angedeutet ist. Die Strömungskanäle bzw. Strömungsschleifen 14 sind nach Außen durch die äußere Kanalwand bzw. äußere Begrenzung 22 begrenzt und sind nach Innen durch die innere Kanalwand bzw. innere Begrenzung 24 begrenzt. Je Strömungsschleife ist die innere Begrenzung 24 die Seitenwand einer Säule 26. Bei der dargestellten Ausführung ist der Querschnitt der Säule 26 von oben gesehen tropfenförmig, wobei das spitze Ende in Richtung Überlappungsbereich 15 weist. In Ausgestaltung kann der Querschnitt der Säule auch eine andere Form haben, beispielsweise kreisförmig oder elliptisch - vorzugsweise mit einem in Richtung Überlappungsbereich 15 spitz zulaufenden Ende. In Ausgestaltung kann die äußere oder die innere Begrenzung 22, 24 entfallen und nur jeweils eine Begrenzung vorgesehen sein. Bei Verwendung der chiralen Trägerelemente 64 (Fig. 9) kann die Strömungsvorrichtung in Ausgestaltung auch ohne die äußere und innere Begrenzung vorgesehen sein.

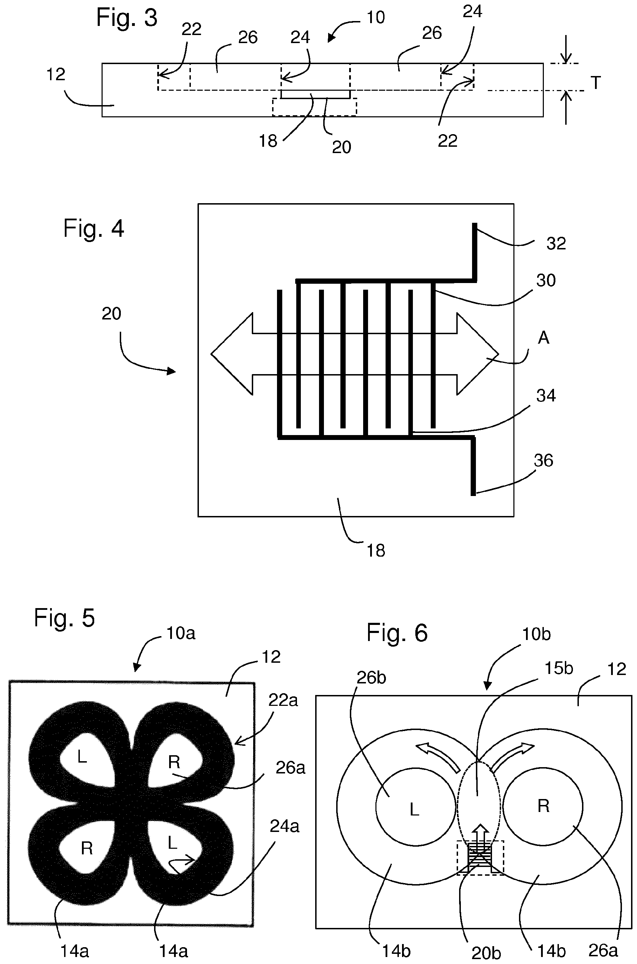

Im Bodenbereich des Substrats 12 in einem inneren Abschnitt, vorzugsweise im Zentrum der Strömungsschleifen bzw. innerhalb des Überlappungsbereichs 15, ist eine Bodenöffnung 16 durch das Substrat 12 vorgesehen. Im dargestellten Beispiel und wie aus der Seitenansicht in Fig. 3 ersichtlich, ist von der Unterseite des Substrats eine Ausnehmung 17 angrenzend an die Bodenöffnung 16 vorgesehen, in die ein Trägersubstrat 18 mit einem interdigitalen Transducer 20 eingesetzt ist. Das Trägersubstrat 18 mit dem interdigitalen Transducer 20 wirkt als Fördervorrichtung für das Fluid und ist ein Substrat aus piezoelektrischem Material.

Wie in Fig. 3 dargestellt, hat der Fluidkanal eine Tiefe T, die in den beschriebenen Ausführungsbeispielen gleichmäßig entlang aller Fluidkanäle (Strömungsschleifen 14, 14a, 14b und Überlappungsbereich 15, 15a) eingehalten ist. In Ausgestaltung kann die Tiefe des Kanals entlang der Strömungsrichtung der Schleifen und/oder quer zu den Strömungsrichtungen variieren. Beispielsweise kann die Kanaltiefe im Überlappungsbereich tiefer sein und in Richtung außen liegender Bereiche der Schleifen 14, 14a, 14b abnehmen und/oder quer zur Strömungsrichtung kann die Kanaltiefe jeweils von der Mitte aus zum Rand bzw. zur Begrenzung 22, 24 abnehmen. In den Figuren ist eine rechtsdrehende Fluidströmung mit R gekennzeichnet und eine linksdrehende Fluidströmung ist mit L gekennzeichnet.

Wie in Fig. 4 im Detail dargestellt, besteht der Interdigital Transducer 20 (Schallwandler) aus zwei ineinandergreifenden Kammstrukturen 30, 34, wobei die erste Kammstruktur 30 einen ersten Anschlusspunkt 32 und die zweite Kammstruktur 34 einen zweiten Anschlusspunkt 36 zur elektrischen Verbindung mit einer Treiberschaltung (nicht dargestellt) hat. Bei Anregung mit einer hochfrequenten Spannung (beispielsweise 136 MHz) erzeugt der Transducer an der Oberfläche bzw. an der Oberseite des Trägersubstrats 18 eine bidirektionale Oberflächenwelle (SAW = Surface Acoustic Wave). Die Ausbreitungsrichtung der Oberflächenwelle ist mit dem Pfeil A dargestellt. Die Oberflächenwelle induziert nach einem Einschwingvorgang (im stationären Zustand) eine Fluidströmung mit den oben beschriebenen Vierquadranten-Strömungen, die im Falle der Strömungsvorrichtung in den Strömungsschleifen 14 kanalisiert werden - vergleiche auch die nachfolgend dargestellten Strömungsschleifen 14a und 14b oder eine nicht dargestellte Ausgestaltung der Strömungsbegrenzungen, die nur Innen (vgl. Begrenzung 24) oder nur Außen (vgl. 22) vorgesehen sind.

Fig. 5 zeigt eine Ausgestaltung der Vierquadranten-Strömungsvorrichtung 10a, bei der die innere und äußere Begrenzung 22a, 24a der Strömungsschleifen 14a näher an den Verlauf der theoretischen und in Fig. 1 dargestellten Strömungslinien 8 angenähert sind. Entsprechend sind die äußeren Radien der 'Kleeblätter' größer bzw. die Schleifen 14a sind Außen abgeflacht im Vergleich zum Verlauf der in Fig. 2 dargestellten Schleifen 14. Dies gilt entsprechend für die innere und äußere Begrenzungen 22a, 24a und die Säulen 26a.

Fig. 6 zeigt eine weitere Ausgestaltung der Strömungsvorrichtung 10b, die als Zweiquadranten-Strömungsvorrichtung mit nur zwei Strömungsschleifen 14b ausgestaltet ist. Die Fluidströmung umströmt hier zwei rund ausgestaltete Säulen 26b, wobei der Überlappungsbereich in den überlappenden Kreisflächen der Schleifen 14b liegt. Das Fluid wird ebenfalls von einem interdigitalen Transducer 20a gefördert, der bei dieser Ausgestaltung außerhalb des Überlappungsbereichs liegt. Durch die asymmetrische Anordnung des Transducers werden die Strömungen in den 'nur' zwei Schleifen angeregt. In alternativer Ausgestaltung kann der interdigitale Transducer bei der Strömungsvorrichtung 10b unterhalb des Überlappungsbereichs 15b angeordnet sein, ist jedoch asymmetrisch ausgestaltet. Beispielsweise verlaufen die Längsleiter V-förmig zueinander und die Zinkenlänge nimmt in eine Richtung sukzessive zu. Durch das asymmetrische Layout breitet sich die Oberflächenwelle keilförmig aus und induziert im Zusammenwirken mit den zwei Schleifen als Strömungsleitflächen eine Zweiquadranten-Strömung.

Fig. 7 zeigt eine weitere Ausgestaltung einer Strömungsvorrichtung 10c, bei der zwei Vierquadranten-Strömungsvorrichtungen (wie sie in Fig. 2 dargestellt ist) auf einem Substrat 12 angeordnet und in Reihe geschaltet sind. Jede der Vierquadranten-Strömungsvorrichtungen hat seine eigene Fluidfördereinrichtung in Form eines interdigitalen Transducers 20 (vgl. Fig. 4) und es bilden sich jeweils die links- und rechtsdrehenden Strömungen L, R aus. Aus dem zweiten Quadranten II wird ein Teil des strömenden Fluids mit den chiralen Molekülen oder chiralen Trägerelementen 64 durch einen tangentialen Ausleitungsabschnitt 44 entnommen. Der entnommene Teil des Fluids wird über einen Ableitungskanal 40 zu einem tangential ausgerichteten Einleitungsabschnitt 44 am Rande des vierten Quadranten IV der zweiten Vierquadranten-Strömungsvorrichtung geleitet und dort eingespeist. Die tangentiale Ausrichtung der Ein- und Ausleitungsabschnitte 44 ist so orientiert, dass die in den Schleifen 14 zirkulierende Strömung möglichst wenig beeinflusst wird, d.h. die tangentiale Ausrichtung führt zu einer Fluidentnahme und Fluideinspeisung mit einer Strömungs- bzw. Impulskomponente, die nur minimal von der Impulskomponente der Strömung in der Schleife 14 abweicht. Eine entsprechende Rückführung von Fluid aus der zweiten Vierquadranten-Strömungsvorrichtung in die erste Vierquadranten-Strömungsvorrichtung erfolgt mit bzw. durch einen Zuleitungskanal 42 der zwischen dem dritten Quadranten III der zweiten Vierquadranten-Strömungsvorrichtung und dem dritten Quadranten III der ersten Vierquadranten-Strömungsvorrichtung verläuft. Durch diese Reihenschaltung und die beiden Verbindungsleitungen 40, 42 wird der Grad der Separation der Enantiomere in der zweiten Vierquadranten-Strömungsvorrichtung nach deren Chiralität erhöht, ohne dass Fluid von außen zugeführt bzw. entnommen werden muss.

Fig. 8 zeigt eine weitere Ausgestaltung einer Vierquadranten-Strömungsvorrichtung 10d, die von der Grundgestaltung der Vierquadranten-Strömungsvorrichtung 10 von Fig. 2 entspricht. Der Unterschied besteht darin, dass die Strömung in den Schleifen 14 nicht durch einen interdigitalen Transducer, sondern durch eine Fluidpumpe 50 induziert wird. Die Pumpe kann eine Membranpumpe oder eine Kreiselpumpe sein und/oder ist in das Substrat 12 integriert. Die Strömung wird dadurch induziert, dass die Pumpe 50 das Fluid durch einen Ansaugkanal 52 ansaugt, der mit einem Einleitabschnitt 56 verbunden ist. Das geförderte Fluid wird von der Pumpe durch einen Rückführkanal 54 zurückgespeist, der in einen Ausleitabschnitt 56 mündet.

Wie die Ein- und Ausleitabschnitte 44 der Fig. 7 sind hier der Einleit- und Ausleitabschnitt 56 tangential an den Strömungsschleifen 14 angeordnet, wobei das entnommene und das rückgeführte Fluid aufgrund der Tangential-Komponente der Aus- und Einleitung gegenüber der in der Schleife angrenzend zirkulierenden Strömung nur einen geringen Unterschied in der Impulsrichtung aufweist. Das tangentiale Entnehmen und Einspeisen des Fluids induziert einen Wirbel wie in einem Strömungsbecken eines Hallenbads.

In Fig. 9 ist in einer Seiten-Schnittansicht der Strömungsvorrichtung von Fig. 8 der Bereich der Einleitung des von der Pumpe geförderten Fluids detaillierter dargestellt.

Fig. 10 zeigt ein Ablaufdiagramm, das zwei Ausgestaltungen eines Verfahrens zur Separation von chiralen Molekülen aus einem Racemat unter Verwendung von chiralen Trägerelementen veranschaulicht. Die beiden Ausgestaltungen unterscheiden sich dadurch, dass
a) chirale Moleküle (im chiralen (z.B. racemischen) Gemisch) an die chiralen Trägerelemente (im chiralen (z.B. racemischen) Gemisch) gebunden werden (Schritt 106 zwingend), die Trägerelemente separiert werden (Schritt 108) und die separierten chiralen Moleküle von den separierten chiralen Trägerelementen (Schritt 114) gewonnen werden, oder
b) die chiralen Trägerelemente (im chiralen Gemisch) separiert werden (Schritt 108 ohne Schritt 106), ein chirales Gemisch von chiralen Molekülen auf die separierten Trägerelemente angewendet wird (Schritt 120) und die nicht-gebundenen Moleküle entfernt werden (Schritt 122). Schließlich werden in Variante b(i) die separierten chiralen Moleküle von den separierten chiralen Trägerelementen (Schritt 114) gewonnen und diese separierten chiralen Trägerelemente werden für die Applikation verwendet. In Variante b(ii) werden die von der Trägerelementen nicht-gebundenen chiralen Moleküle entfernt (Schritt 122) und die nicht-gebundenen und damit ebenfalls sortiert vorliegenden chiralen Moleküle werden für die Applikation verwendet.

Im Einzelnen:
Im Schritt 102 werden chirale Trägerelemente 64 in einem chiralen Gemisch bereitgestellt. Die chiralen Trägerelemente 65 können z.B. 20 µm groß sein und/oder können chirale Kristalle sein (beispielsweise chirale Metallorganische Strukturen (metal-organic Frameworks - MOFs)), und/oder können künstlich erzeugte DNA-Nanostrukturen sein (DNA nanodevice / DNA Origami). Die chiralen Trägerelemente haben die Eigenschaft gepaart zur eigenen Chiralität chirale Moleküle der gleichen Chiralität oder der gegengleichen Chiraltität an sich zu binden - gegebenenfalls unter Verwendung eines Bindemittels oder Haftvermittlers.

Im optionalen Schritt 104 werden die Trägerelemente 64 mit einem Imprägniermittel beschichtet oder imprägniert, das die mittlere Dichte des (imprägnierten/beschichteten) Trägerelements so einstellt, dass das Trägerelement an der Oberfläche einer Flüssigkeit schwimmt. Dadurch ist sichergestellt, dass während des Trennvorgangs in der Strömungsvorrichtung das Trägerelement einem Symmetriebruch unterliegt. Das ist beispielsweise der Symmetriebruch an der Grenzfläche zwischen der Träger-Flüssigkeit und einem angrenzendem Fluid (Flüssigkeit, die leichter ist als die Flüssigkeit in der das Trägerelement schwimmt oder ein Gas (beispielsweise Luft)). Durch den Symmetriebruch wird es ermöglicht, dass die Trägerelemente in den rechts- und linksdrehenden Strömungswirbeln entsprechend ihrer Chiralität getrennt werden. Wie einleitend beschrieben ist es jedoch auch möglich, die an der Grenzfläche Fluid/Festkörperoberfläche der Strömungsvorrichtung selektierten Trägerelemente zu entnehmen. Beispielsweise vom Boden einer der Strömungsschleifen 14 (aus I/III oder II/IV). Das Ab-Pipettieren von der Fluid- bzw. Flüssigkeitsoberfläche stört das Strömungssystem jedoch weniger als ein Ab-Pipettieren vom Boden einer Strömungsschleife, so dass dieses vorteilhafter ist.

Der Schritt 106 ist zwingend für obige Variante (a) des Verfahrens und wird ausgelassen bei obiger Variante (b) des Verfahrens. Bei der Variante (a) können die Schritte 104 (falls verwendet) und 106 vertauscht sein, wie durch den Doppelpfeil angezeigt. Im Schritt 106 werden die chiralen Moleküle entsprechend ihrer Chiralität an Trägerelemente der gleichen oder gegengleichen Chiralität gebunden. Ein Trägerelement kann genau ein oder mehrere Moleküle der entsprechenden Chiralität binden.

Beim Schritt 108 werden die Trägerelemente mit (a) oder ohne (b) gebundene Moleküle in das Fluid in der Strömungsvorrichtung 10, 10a-d gegeben. Dies kann erfolgen, bevor die Strömung mittels der Fördervorrichtung 20, 50 induziert wird oder wenn sich bereits eine stationäre Strömung ausgebildet hat oder gerade ausbildet. Da die Selektivität bei den gegenüber den Molekülen großen Trägerelementen auch bei einer Strömungsvorrichtung 2 ohne die äußere und/oder innere Begrenzung 22, 24 gegeben ist, sind die Verfahren (a) und (b) auch bei einer nicht-kanalisierten Vierquadranten-Strömungsvorrichtung ausführbar. Beispielsweise in der in Verbindung mit der Figur 1 beschriebenen bekannten Strömungsvorrichtung.

Die in den links- oder den rechtsdrehenden Strömungen angereicherten Trägerelemente der getrennten Chiralität werden entnommen, beispielsweise mittels Ab-Pipettieren. Die Entnahme kann beispielsweise aus den Quadranten I, III oder aus den Quadranten II, IV der Anordnung von Fig. 2 entnommen werden - je nach gewünschter Chiralität.

Optional können die bereits separierten Trägerelemente durch eine weitere Stufe der Separierung mittels eines oder mehrerer Durchläufe der Schritte 108xn weiter separiert werden, so dass sich der Reinheitsgrad des gewünschten Enantiomers weiter erhöht. Dazu kann mehrmals die gleich Strömungsvorrichtung oder es können nacheinander baugleiche oder ähnliche Strömungsvorrichtungen verwendet werden oder eine Reihenschaltung von Strömungsvorrichtungen wie in Fig. 7 gezeigt.

Beim Schritt 110 werden die Trägerelemente der gewünschten Chiralität aus der Strömungsvorrichtung entnommen.

Sind die Moleküle bereits an die Trägerelemente gebunden (Verfahren (a)), wird in einem optionalen Schritt 112 das Imprägnierungs- oder Beschichtungsmittel von den Trägerelementen entfernt (nur nachdem der Schritt 104 ausgeführt wurde).

Anschließend oder optional vor dem Schritt 112 werden im Schritt 114 die an den Trägerelementen gebundenen Moleküle von den Trägerelementen gelöst. Der Schritt 114 ist dann optional, wenn beispielsweise die Verabreichung oder Anwendung der selektierten Moleküle erfolgen kann oder soll, wenn diese noch an die Trägerelemente gebunden sind. Weiter optional kann es dann nicht notwendig sein, die Imprägnierung zu entfernen (Schritt 112), soweit diese vorhanden ist (Schritt 104).

Damit liegt als Endprodukt das nach Chiralität angereicherte bzw. sortierte Molekül im Schritt 116 vor.

Bei der Verfahrensvariante (b) werden nach der Entnahme der separierten Trägerelemente der gewünschten Chiralität im Schritt 110, die separierten Trägerelemente einem chiralen Gemisch der chiralen Moleküle im Schritt 120 ausgesetzt. Dabei binden sich bevorzugt oder ausschließlich Moleküle einer Chiralität an die selektierten Trägerelemente (gleiche oder gegengleiche Chiralität).

Im Schritt 122 werden die ungebundenen Moleküle (die nun mehr oder nur Moleküle der nichtgebundenen Chiralität sind) von den Trägerelementen separiert. Dadurch liegen Trägerelemente mit daran gebundenen Molekülen der gewünschten Chiralität vor - entsprechend der Verfahrensvariante b(i). Die Trennung (oder Nicht-Trennung) der Moleküle von den Trägerelementen und die optionale Entfernung der Imprägnierung kann dann wie oben zu den Schritten 112 - 116 beschrieben erfolgen.

In der Verfahrensvariante b(ii) werden im Schritt 122 ebenfalls die nicht an die Trägerelemente gebundenen Moleküle (nicht-gebundene Moleküle) von den Trägerelementen (an denen die Moleküle der anderen Chiralität gebunden sind) separiert und diese nicht-gebundenen Moleküle verwendet (Schritte 112 und 114) können in jedem Fall entfallen), da diese aufgrund der Selektivität eben nicht gebunden wurden. Vorzugsweise wird hier beim Schritt 120 ein Überschuss an Trägerelementen im Vergleich zur bindungsfähigen Anzahl von Molekülen im chiralen Gemisch bereitgestellt, so dass die Moleküle der zu den Trägerelementen gepaarten Chiralität mit sehr hoher Wahrscheinlichkeit gebunden werden.

Im Folgenden wird die Erfindung wie oben beschrieben mit weiteren Aspekten dargestellt. Die obigen Aspekte (Merkmale und Unter-Kombinationen von Merkmalen des Beschreibungseinleitungsteils und/oder des Teils der detaillierten Beschreibung) sind bei den Aspekten wie unten beschrieben vollumfänglich und in jeder beliebigen Unterkombination anwendbar. Umgekehrt sind die unten beschriebenen Aspekte (Merkmale und Unter-Kombinationen von Merkmalen) bei den Aspekten wie oben im Einleitungsteil und im detaillierten Beschreibungsteil dargestellt vollumfänglich und in jeder beliebigen Unterkombination anwendbar.

Zur Demonstration der Sortiereffizienz wurden bereits einige Prototypen von Strömungsvorrichtungen (die im Folgenden als "Reaktoren" bezeichnet werden) aufgebaut. Vorzugsweise und zur leichten Bearbeitung sowie aufgrund der hydrophoben Eigenschaft sind die Reaktoren aus Teflon (als Substratmaterial 10) gearbeitet und durch Mikrofräsen hergestellt. Im Zentrum jedes kleeblattförmigen Reaktors (vgl. Fig. 2 und 5) ist eine Öffnung zur Aufnahme des piezoelektrischen Chips (Trägersubstrat 18) mit dem IDT (Interdigitaler Transducer 20) angebracht. Aus Gründen der Dichteanpassung sind mit Heptan imprägnierte MOFs (Metal Organic Frameworks als Trägerelemente 64) vorgesehen. Diese werden in einer 5 µl n-Heptan Lösung auf die Wasseroberfläche in einen Reaktor pipettiert. Die Pipettierung erfolgt in das Sortierzentrum (den Überlappungsbereich 15, 15a) direkt über dem SAW-Chip 18. Vorzugsweise ist das Design eines Reaktors (vgl. Fig. 2 und Fig. 5) angepasst, entsprechend des vom Frequenzgenerator zum IDT angelegten Pegels und somit entsprechend der Strömungsleistung.

Für die Überprüfung der Steigerung der Effizienz durch das Vorsehen der inneren Säulen 26, 26a, 26b wurden Reaktoren in der Form eines einfachen Kleeblatts (ohne Säulen) getestet. Hierbei entstehen dann die oben genannten unerwünschten Strömungen 4 ("tote Wirbel"), welche nicht durch das Strömungszentrum direkt über dem IDT fließen und Kristalle gefangen halten können. Beispielsweise werden linksdrehende Kristalle in einer rechtsdrehenden Strömung gefangen, welche sich durch eine Umkehr der Strömungsrichtung im Zentrum nicht mehr in die linksdrehende Strömung einordnen können. Bei den obigen Ausführungsbeispielen, bei denen die Säulen 26, 26a, 26b vorgesehen sind, wird dieser Effekt durch die im Reaktor stehenden Säulen umgangen und sämtliche Kristalle in dem Behälter werden nach einem Umlauf permanent durch das Strömungszentrum getrieben. Die Adaptierung des SAW-Chips 18 von der Unterseite durch den Substratboden ist eine weitere Optimierung, um einem entstehenden Verwirbeln der Strömung durch einen innenliegenden Chip 18 mit Zuleitungen (zu den Anschlüssen 32, 36) über die Wasseroberfläche vorzubeugen. Für diese spezielle Anwendung werden auf dem SAW-Chip 18 die zusätzlichen Rückseitenkontakte 32, 36 angebracht. Eine passgenaue Elektronikeinheit drückt den Chip mit Federkontaktstiften auf eine O-RingDichtung (nicht dargestellt) unterhalb des Substrats, an der die SAW in die Flüssigkeit einkoppelt. Vorzugsweise sorgt ein IDT-Chip mit Rückseitenkontakten und außenliegender Elektronik durch das Kontaktieren über eine runde Kanalöffnung mit Dichtung von unten für eine störungsfreie Strömungsausbreitung.

Die Säulen 26, 26a, 26b sind strömungsoptimiert in Hinsicht auf die Verringerung von Wirbeln an den Säulenwänden und/oder auf die Verringerung des Strömungswiderstands in den Schleifen. Die Säulen sorgen dafür, dass alle Teilströmungen das Strömungszentrum 15, 15a passieren und es zu keinem gefangenen Strömungsbereich kommt. Für eine homogene Verteilung der Leistung in alle vier Sortierbereiche bzw. Strömungsschleifen 14, 14a ist der Reaktor horizontal ausgerichtet. Zur Ausrichtung sind vorzugsweise eine Libelle und/oder vier Stativ-Stellschrauben an der Unterseite des Substrats 12 vorgesehen, so dass der Reaktor horizontal nivelliert werden kann, damit jeder Teilströmung dieselbe Leistung zukommt.

Durch eine transparente Abdeckung aus Acrylglas bleiben die Strömungskanäle bzw. Schleifen 14, 14a, 14b unabhängig von äußeren Einflüssen.

Zur Erzeugung der akustischen Oberflächenwellen werden abgeschrägte (getaperte) IDTs mit einer Periode λ_{IDT} im Bereich von 23,15 µm bis 24,44 µm angewendet. Dies entspricht einer Frequenz von 167,26 MHz im Zentrum des IDTs mit einer Schallgeschwindigkeit von 3980 ms⁻¹ entlang der Oberfläche im y-Schnitt des LiNbO₃-Trägersubstrats 18. Mit dem getaperten IDT lässt sich die SAW ortsaufgelöst auf das Zentrum des Sortierbehälters einstellen. Außerdem konzentriert bei einer solchen Anordnung der Transducer die gesamte Leistung auf einen schmalen Bereich des IDTs, was zu einer stärkeren Einkopplung in die Flüssigkeit führt. Eine geringe Schichtdicke von 5 nm Titan als Haftvermittler zwischen dem Substrat und 50 nm Gold ist erforderlich, damit die SAW möglichst wenig Masse bewegen muss und die Welle durch den Transducer nicht gedämpft wird.

Nach einem Durchlauf der Sortierung erfolgt die Entnahme der Kristalle (Trägerelemente 64) an der Flüssigkeitsoberfläche mit Pipetten. Jeweils ein Flüssigkeitstropfen mit beinhaltenden Kristallen aus den vier Quadranten wird auf einem Kohleschicht-Klebestreifen ausgetrocknet bis die CFA-1 Trägerelemente 64 in den Klebestreifen eingebettet sind. Die Erzeugung von CFA-1 Kristallen ist beschrieben in P. Schmieder, D. Volkmer et al. "CFA-1: the first chiral metal-organic framework containing Kuratowski-type secondary building units", Dalton Transactions (Cambridge, England: 2003), Vol. 42, No. 30, pp. 10786-97 (2013).

Beispielsweise dient eine anschließende Beschichtung mit 5 nm Gold der besseren elektrischen Leitfähigkeit, damit sich die Kristalle unter dem Einfluss eines Elektronenstrahls am ESEM nicht aufladen. Ein erster Sortiervorgang der chiralen MOF-Trägerelemente von 30 Minuten hat das Funktionsprinzip mit einer Sortierrate von annähernd 30% zu 70 % bereits sichergestellt. Für diese Statistik wurden insgesamt 240 CFA-1 unter dem Elektronenstrahlmikroskop detektiert und den Drehrichtungen entsprechend abgezählt. Diese geringen Sortierraten machen eine manuelle Auswertung unumgänglich und stellen eine akkuratere Erfassung der Daten über ein Festkörper CD-Spektrum oder durch Experimente der chiralen Lichtdrehung außer Frage.

Da die Separation von links- zu rechtsdrehenden CFA-1 größenabhängig erfolgt, werden die Kristalle für weitere Untersuchungen mit Filtern in einen Größenbereich zwischen 10 µm und 30 µm eingeteilt. Dabei werden die CFA-1 in n-Heptan-Lösung durch einen Stufenfilter aus 30 µm mit darunter angebrachten 10 µm filtriert. Eine anschließende Rückspülung der CFA-1 mit n-Heptan durch den 10 µm Filter in ein Becherglas bewirkt, dass sämtliche Kristalle im definierten Größenbereich beinhaltet sind. Über den folgenden Sortiervorgang von 60 Minuten stellt sich eine deutliche Verbesserung der Kristallreinheit heraus. Hier orientiert sich die Reinheit für beide Kristalltypen mit insgesamt 1689 erfassten MOFs bei knapp 80 %. Ein wiederholter Sortiervorgang der CFA-1 aus nur einem der vier Quadranten reduziert den Ertrag zwar deutlich, jedoch erhöht dies die Reinheit dieser chiralen Kristalle in dem Fall auf 89%. Kristallzwillinge oder Kristalle mit fehlenden Details bzw. Bruchstücke zählen als Defekte und bleiben in dieser Statistik unberücksichtigt. Über eine längere Sortierzeit sowie durch wiederholte Sortierung (Schritt 108nx) oder Kaskadierung von Strömungsvorrichtungen (vgl. Fig. 7) der jeweils über den Punkt des Sortierzentrums 105, 105a reflektierten Quadranten mit selber Drehrichtung ist eine weitere Optimierung zu erreichen.

Die Sortiervorrichtungen lassen sich direkt auf Chipebene durch Anordnung mehrerer Sortiervorrichtungen auf einem Chip miniaturisieren. Dies ermöglicht mehrere aufeinanderfolgende Sortierfolgen mit automatischem Pipettieren (beispielsweise unter Verwendung einer Robotik). Dabei wird ein Roboter die sortierten Kristalle aus zwei gegenüberliegenden Quadranten (I + III bzw. II + IV) vom ersten Chip zu weiteren Chips mit Mikrokanälen usw. verteilen. Durch diese Methode wird sich die Reinheit weiter erhöhen.

### Bezugszeichenliste

- 2: Freie Vier-Quadranten-Strömung
- 4: innere Totzone
- 6: äußere Totzone
- 8: geschlossener Strömungskreis
- 10, 10a-d: Strömungsvorrichtung
- 12: Substrat
- 14, 14a, 14b: Strömungsschleife
- 15, 15b: Überlappungsbereich
- 16: Bodenöffnung
- 17: Ausnehmung
- 18: Trägersubstrat
- 20, 20b: Interdigitaler Transducer / Fördervorrichtung
- 22, 22a: äußere Begrenzung
- 24, 24a: innere Begrenzung
- 26, 26a-b: Säule
- 30: erste Kammstruktur
- 32: erster Anschlusspunkt
- 34: zweite Kammstruktur
- 36: zweiter Anschlusspunkt
- 40: Ableitungskanal
- 42: Zuleitungskanal
- 44: Ein-/Ausleitabschnitt
- 50: Fluidpumpe
- 52: Ansaugkanal
- 54: Rückführkanal
- 56: Ein-/Ausleitabschnitt
- 60: Fluid
- 62: Fluidoberfläche / Grenzfläche
- 64: MOF / Trägerelement
- I, II, III, IV: Quadranten
- A: SAW-Ausbreitungsrichtung
- L: linksdrehend
- R: rechtsdrehend
- T: Kanaltiefe

## Patentansprüche

1. Strömungsvorrichtung (10, 10a-d) für Fluidströmungen zur Trennung von chiralen Substanzen oder chiralen Trägerelementen (64), wobei die chiralen Trägerelemente (64) als Fängerstrukturen wirken, die in einem Bindungsschritt ein oder mehrere chirale Moleküle mit einer der Chiralitäten ausschließlich oder zumindest überwiegend binden, wobei die Strömungsvorrichtung aufweist:
zumindest eine rechtsdrehende Strömungseinrichtung (14, 14a-b) mit rechtsdrehender Fluid-Strömung (R),
zumindest eine linksdrehende Strömungseinrichtung (14, 14a-b) mit linksdrehender Fluid-Strömung (L), und
eine Fluidfördereinrichtung (20, 50), die dazu ausgebildet ist, in der zumindest einen linksdrehenden Strömungseinrichtung die linksdrehenden Strömung (L) zu induzieren und in der zumindest einen rechtsdrehenden Strömungseinrichtungen die rechtsdrehende Strömung (R) zu induzieren;
**dadurch gekennzeichnet, dass**
die Strömungsvorrichtung (10, 10a-d)
zumindest ein erstes Strömungsleitelement (22, 22a, 24, 24a, 26, 26a-b) aufweist, um einen Teil der von der Fluidfördereinrichtung induzierten Fluid-Strömung in eine rechtsdrehende Fluid-Strömung (R) in der zumindest einen rechtsdrehenden Strömungseinrichtung zu überführen, und
zumindest ein zweites Strömungsleitelement (22, 22a, 24, 24a, 26, 26a-b) aufweist, um einen Teil der von der Fluidfördereinrichtung induzierten Fluid-Strömung in eine linksdrehende Fluid-Strömung (L) in der zumindest einen linksdrehenden Strömungseinrichtung zu überführen.

2. Strömungsvorrichtung nach Anspruch 1,
wobei die zumindest eine rechtsdrehende Strömungseinrichtung
- als Strömungskanal (14, 14a-b) ausgebildet ist, und/oder
- eine erste äußere Strömungsleiteinrichtung (22, 22a) aufweist, die die rechtsdrehende Fluid-Strömung (R) der rechtsdrehenden Strömungseinrichtung an deren Außenseite begrenzt, und/oder
- eine erste innere Strömungsleiteinrichtung (24, 24a) aufweist, die die rechtsdrehende Fluid-Strömung (R) der rechtsdrehenden Strömungseinrichtung an deren Innenseite begrenzt, und/oder
wobei die zumindest eine linksdrehende Strömungseinrichtung
- als Strömungskanal (14, 14a-b) ausgebildet ist, und/oder
- eine zweite äußere Strömungsleiteinrichtung (22, 22a) aufweist, die die linksdrehende Fluid-Strömung (L) der linksdrehenden Strömungseinrichtung an deren Außenseite begrenzt, und/oder
- eine zweite innere Strömungsleiteinrichtung (24, 24a) aufweist, die die linksdrehende Fluid-Strömung (L) der linksdrehenden Strömungseinrichtung an deren Innenseite begrenzt.

3. Strömungsvorrichtung nach Anspruch 1 oder 2, wobei die Strömungsvorrichtung vier Strömungseinrichtungen (14, 14a) aufweist, wovon zwei Strömungseinrichtungen linksdrehende Fluidströmungen (L) und zwei Strömungseinrichtungen rechtsdrehende Fluidströmungen (R) ausbilden, wobei insbesondere die vier Strömungseinrichtungen in Quadranten-Struktur oder Kleeblattförmig angeordnet sind.

4. Strömungsvorrichtung nach Anspruch 1, 2 oder 3, wobei die rechts- und linksdrehende Strömungseinrichtung(en) aus einem für das Fluid und/oder die chiralen Trägerelemente (64) oder chiralen Substanzen haftungs- und/oder reibvermindernden Material ausgebildet sind oder mit einem haftungs- und/oder reibvermindernden Material beschichtet sind.

5. Strömungsvorrichtung nach einem der vorhergehenden Ansprüche, wobei die Fluidfördereinrichtung (20, 50) ein oder mehrere der folgenden Elemente aufweist:
einen Transducer (20), insbesondere einen interdigitalen Transducer,
eine Fluidpumpe (50),
eine Umwälzpumpe,
eine Membranpumpe, und
ein Rührerelement.

6. Strömungsvorrichtung nach einem der vorhergehenden Ansprüche,
wobei die zumindest eine Strömungsvorrichtung (10, 10a-d) zumindest teilweise mit einem Fluid (60) gefüllt ist, und
wobei in dem Fluid (60) eine Vielzahl von chiralen Trägerelementen (64) oder Substanzen vorhanden ist.

7. Strömungsvorrichtung nach einem der vorhergehenden Ansprüche,
wobei in der Strömungsvorrichtung (14, 14a-b) ein Fluid (60) derart eingefüllt ist, dass das Fluid eine Grenzfläche (62) zu einem angrenzenden Fluid ausbildet, und
wobei die chiralen Substanzen oder die chiralen Trägerelemente (64) und das Fluid (60) so aufeinander abgestimmt sind, dass sich die chiralen Substanzen oder die chiralen Trägerelemente an der Grenzfläche (62) des Fluids zum angrenzenden Fluid aufhalten.

8. Substrat (12) mit einem oder einer Vielzahl von in und/oder auf dem Substrat angeordneten Strömungsvorrichtungen (10, 10a-d) nach einem der vorhergehenden Ansprüche.

9. Substrat nach Anspruch 8, wobei auf und/oder in dem Substrat (12) zwei Strömungsvorrichtungen (14) fluidisch in Reihe geschaltet sind.

10. Chirale Trägerelemente (64), insbesondere zur Verwendung bei einer Strömungsvorrichtung oder einem Substrat nach einem der vorhergehenden Ansprüche, wobei die chiralen Trägerelemente (64) als Fängerstrukturen wirken, die in einem Bindungsschritt ein oder mehrere chirale Moleküle mit einer der Chiralitäten ausschließlich oder zumindest überwiegend binden,
**dadurch gekennzeichnet, dass**
die chiralen Trägerelemente (64) mit einem Anpassungsmittel gefüllt, getränkt oder imprägniert sind,
wobei das Anpassungsmittel die Dichte der Trägerelemente (64) anpasst und als Ballastmittel zum Erhöhen der mittleren Dichte von Trägerelement (64) und Ballastmittel gegenüber der Dichte des Trägerelements (64) oder als Auftriebsmittel zum Verringern der mittleren Dichte von Trägerelement (64) und Auftriebsmittel gegenüber der Dichte des Trägerelements (64) an sich ausgebildet ist; und/oder
wobei das Anpassungsmittel die hydrophile oder hydrophobe Eigenschaft der Trägerelemente (64) so anpasst, dass sich bei Verwendung zumindest ein großer Teil der Trägerelemente (64) an der Grenzfläche eines Trägerfluids zu einem anderen Fluid oder einer Festkörperoberfläche aufhalten.

11. Chirale Trägerelemente (64) zur Verwendung bei einer Strömungsvorrichtung oder einem Substrat nach einem der vorhergehenden Ansprüche,
wobei an den chiralen Trägerelementen chirale Moleküle gebunden sind und die Chiralität der Moleküle zur Chiralität der Trägerelemente korrespondiert oder umgekehrt korrespondiert.

12. Verfahren zur Trennung von chiralen Substanzen unter Verwendung von chiralen Trägerelementen (64), wobei die chiralen Trägerelemente (64) als Fängerstrukturen wirken, die in einem Bindungsschritt ein oder mehrere chirale Moleküle mit einer der Chiralitäten ausschließlich oder zumindest überwiegend binden,
**dadurch gekennzeichnet, dass**
das Verfahren die Schritte aufweist:
Bereitstellen (102) eines chiralen Gemischs von Trägerelementen (64),
Separieren (108) des chiralen Gemischs von Trägerelementen (64) in einer Strömungsvorrichtung, die links- und rechtsdrehende Fluid-Strömungen (L, R) ausbildet oder in einer Strömungsvorrichtung (14, 14a-b) nach einem der vorhergehenden Ansprüche,
Entnahme (110) von Trägerelementen (64) aus der Strömungsvorrichtung aus dem oder einem der links- oder rechtsdrehenden Fluid-Strömungen (L, R), und
Bereitstellen (116) von chiralen Substanzen mit einer ausgewählten Chiralität gepaart zu der Chiralität der aus der Strömungsvorrichtung entnommenen Trägerelemente,
wobei ein chirales Gemisch an chiralen Substanzen auf die Trägerelemente (64) appliziert wird und sich die chiralen Substanzen mit einer Chiralität, die zur Chiralität der Trägerelemente (64) gepaart ist (gleichsinnige oder gegensinnige Chiralität), an die Trägerelemente binden, und
wobei das Applizieren der chiralen Substanz auf die Trägerelemente erfolgt,
(a) (Schritt 106) während die Trägerelemente als chirales Gemisch vorliegen und vor dem Schritt des Separierens (108), oder
(b) (Schritt 120) nachdem das chirale Gemisch an Trägerelementen separiert (108) wurde und die separierten Trägerelemente aus der Strömungsvorrichtung entnommen (110) wurden.

## Claims

1. Flow apparatus (10, 10a-d) for fluid flows for separation of chiral substances or chiral carrier elements (64), wherein the chiral carrier elements (64) function as trapping structures, which in one binding step exclusively or at least predominantly bind one or more chiral molecules having one of the chiralities, wherein the flow apparatus comprises:
at least one clockwise flow device (14, 14a-b) having clockwise fluid flow (R),
at least one counter-clockwise flow device (14, 14a-b) having counter-clockwise fluid flow (L), and
a fluid conveyor (20, 50), which is adapted to induce in the at least one counter-clockwise flow device the counter-clockwise flow (L) and to induce in the at least one clockwise flow device the clockwise flow (R);
**characterized in that**
the flow apparatus (10, 10a-d)
comprises at least one first flow guiding element (22, 22a, 24, 24a, 26, 26a-b) to transform one part of the fluid flow induced by the fluid conveyor into a clockwise fluid flow (R) in the at least one clockwise flow device, and
comprises at least one second flow guiding element (22, 22a, 24, 24a, 26, 26a-b) to transform one part of the fluid flow induced by the fluid conveyor into a counter-clockwise fluid flow (R) in the at least one counter-clockwise flow device.

2. Flow apparatus of claim 1,
wherein the at least one clockwise flow device
- is formed as flow channel (14, 14a-b), and/or
- comprises one first external flow guiding device (22, 22a), which limits the clockwise fluid flow (R) of the clockwise flow device on its outside, and/or
- comprises one first internal flow guiding device (24, 24a), which limits the clockwise fluid flow (R) of the clockwise flow device on its inside, and/or
wherein the at least one counter-clockwise flow device
- is formed as flow channel (14, 14a-b), and/or
- comprises one second external flow guiding device (22, 22a), which limits the counter-clockwise fluid flow (L) of the counter-clockwise flow device on its outside, and/or
- comprises one second internal flow guiding device (24, 24a), which limits the counter-clockwise fluid flow (L) of the counter-clockwise flow device on its inside.

3. Flow apparatus of claim 1 or 2, wherein the flow apparatus comprises four flow devices (14, 14a), of which two flow devices form counter-clockwise fluid flows (L) and two flow devices form clockwise fluid flows (R), wherein in particular the four flow devices are arranged in quadrant structure or in cloverleaf-shape.

4. Flow apparatus of claim 1, 2 or 3, wherein the clockwise and counter-clockwise flow device(s) are formed of a material which is adhesion inhibiting and/or friction reducing for the fluid and/or the chiral carrier elements (64) or chiral substances, or which is coated with an adhesion inhibiting and/or friction reducing material.

5. Flow apparatus of any of the preceding claims, wherein the fluid conveyor (20, 50) comprises one or more of the following elements:
a transducer (20), in particular an interdigital transducer,
a fluid pump (50),
a circulation pump,
a membrane pump, and
a stirring element.

6. Flow apparatus of any of the preceding claims,
wherein the at least one flow apparatus (10, 10a-d) is at least partially filled with a fluid (60), and
wherein a plurality of chiral carrier elements (64) or substances exists in the fluid (60).

7. Flow apparatus of any of the preceding claims,
wherein a fluid (60) is filled into the flow apparatus (14, 14a-b) in such a way that the fluid forms a boundary layer (62) to an adjacent fluid, and
wherein the chiral substances or the chiral carrier elements (64) and the fluid (60) are harmonized in a way that the chiral substances or the chiral carrier elements remain at the boundary layer (62) of the fluid to the adjacent fluent.

8. Substrate (12) with one or a plurality of flow apparatus (10, 10a-d) located in and/or on the substrate according to any of the preceding claims.

9. Substrate of claim 8, wherein two flow apparatus (14) are fluidicly connected in series on and/or in the substrate (12).

10. Chiral carrier elements (64), in particular for use with a flow apparatus or a substrate according to any of the preceding claims, wherein the chiral carrier elements (64) function as trapping structures, which exclusively or at least predominantly bind in one binding step one or more chiral molecules having one of the chiralities,
**characterized in that:**
the chiral carrier elements (64) are filled, soaked or impregnated with an adaptation means,
wherein the adaptation means adapts the density of the carrier elements (64) and is formed as ballast means for increasing the average density of carrier element (64) and ballast means with respect to the density of the carrier element (64) or as flotation means for reducing the average density of carrier element (64) and flotation means with respect to the density of the carrier element (64) per se; and/or
wherein the adaptation means adapts the hydrophilic or hydrophobic character of the carrier elements (64) in such a way that by using them at least a big part of the carrier elements (64) remain at the boundary layer of a carrier fluid to another fluid or a solid state surface.

11. Chiral carrier elements (64) for use with a flow apparatus or a substrate according to any of the preceding claims,
wherein chiral molecules are bound to the chiral carrier elements and the chirality of the molecules corresponds or inversely corresponds to the chirality of the carrier elements.

12. Method for separation of chiral substances by using chiral carrier elements (64), wherein the chiral carrier elements (64) function as trapping structures, which in one binding step exclusively or at least predominantly bind one or more chiral molecules having one of the chiralities,
**characterized in that**
the method comprises the following steps:
providing (102) a chiral composite of carrier elements (64),
separating (108) the chiral mixture of carrier elements (64) in a flow apparatus, which forms clockwise and counter-clockwise fluid flows (L, R) or in a flow apparatus (14, 14a-b) according to any of the preceding claims,
removing (110) carrier elements (64) from the flow apparatus from the or one of the counter-clockwise or clockwise fluid flows (L, R), and
providing (116) chiral substances with a chosen chirality paired to the chirality of the carrier elements removed from the flow apparatus,
wherein a chiral mixture of chiral substances is applied to the carrier elements (64) and the chiral substances are binding to the carrier elements having a chirality, which is paired to the chirality of the carrier elements (64) (same signed chirality or opposite signed chirality), and
wherein applying the chiral substance to the carrier elements is effected,
(a) (step 106) while the carrier elements are available as a chiral mixture and before the step of separating (108), or
(b) (step 120) after the chiral mixture of carrier elements was separated (108) and the separated carrier elements were removed (110) from the flow apparatus.

## Revendications

1. Dispositif d'écoulement (10, 10a-d) pour des écoulements de fluide en vue de la séparation de substances chirales ou d'éléments support chiraux (64), les éléments support chiraux (64) agissant comme structures de piège, qui lient exclusivement ou du moins principalement, dans une étape de liaison, une ou plusieurs molécules chirales à une des chiralités, le dispositif d'écoulement présentant :
- au moins un système d'écoulement dextrogyre (14, 14a-b) présentant un écoulement de fluide dextrogyre (R),
- au moins un système d'écoulement lévogyre (14, 14a-b) présentant un écoulement de fluide lévogyre (L) et
- un système de transport de fluide (20, 50) conçu pour induire l'écoulement lévogyre (L) dans ledit au moins un système d'écoulement lévogyre et pour induire l'écoulement dextrogyre (R) dans ledit au moins un système d'écoulement dextrogyre ;
**caractérisé en ce que** le dispositif d'écoulement (10, 10a-d) présente
- au moins un premier élément de guidage d'écoulement (22, 22a, 24, 24a, 26, 26a-b) pour transférer une partie de l'écoulement de fluide induit par le système de transport de fluide dans un écoulement de fluide dextrogyre (R) dans ledit au moins un système d'écoulement dextrogyre et
- au moins un deuxième élément de guidage d'écoulement (22, 22a, 24, 24a, 26, 26a-b) pour transférer une partie de l'écoulement de fluide induit par le dispositif de transport de fluide dans un écoulement de fluide lévogyre (L) dans ledit au moins un système d'écoulement lévogyre.

2. Dispositif d'écoulement selon la revendication 1, ledit au moins un système d'écoulement dextrogyre
- étant conçu sous forme d'un canal d'écoulement (14, 14a-b) et/ou
- présentant un premier système de guidage de fluide externe (22, 22a) qui limite l'écoulement de fluide dextrogyre (R) du système d'écoulement dextrogyre au niveau de sa face externe et/ou
- présentant un premier système de guidage de fluide interne (24, 24a) qui limite l'écoulement de fluide dextrogyre (R) du système d'écoulement dextrogyre au niveau de sa face interne et/ou
ledit au moins un système d'écoulement lévogyre
- étant conçu sous forme d'un canal d'écoulement (14, 14a-b) et/ou
- présentant un deuxième système de guidage de fluide externe (22, 22a) qui limite l'écoulement de fluide lévogyre (L) du système d'écoulement lévogyre au niveau de sa face externe et/ou
- présentant un deuxième système de guidage de fluide interne (24, 24a) qui limite l'écoulement de fluide lévogyre (L) du système d'écoulement lévogyre au niveau de sa face interne.

3. Dispositif d'écoulement selon la revendication 1 ou 2, le dispositif d'écoulement présentant quatre systèmes d'écoulement (14, 14a), dont deux systèmes d'écoulement forment des écoulements de fluide lévogyres (L) et deux systèmes d'écoulement forment des écoulements de fluide dextrogyres (R), les quatre systèmes d'écoulement étant en particulier agencés dans une structure à quadrants ou en forme de trèfle.

4. Dispositif d'écoulement selon la revendication 1, 2 ou 3, le(s) système(s) dextrogyre(s) et lévogyre(s) étant formé(s) à partir d'un matériau diminuant l'adhérence et/ou le frottement pour le fluide et/ou les éléments support chiraux (64) ou les substances chirales ou étant revêtu(s) d'un matériau diminuant l'adhérence et/ou le frottement.

5. Dispositif d'écoulement selon l'une quelconque des revendications précédentes, le système de transport de fluide (20, 50) présentant un ou plusieurs des éléments suivants :
- un transducteur (20), en particulier un transducteur interdigité,
- une pompe à fluide (50),
- une pompe de circulation,
- une pompe à membrane et
- un élément agitateur.

6. Dispositif d'écoulement selon l'une quelconque des revendications précédentes, ledit au moins un dispositif d'écoulement (10, 10a-d) étant au moins partiellement rempli d'un fluide (60) et une multitude d'éléments support chiraux (64) ou de substances chirales étant présents dans le fluide (60).

7. Dispositif d'écoulement selon l'une quelconque des revendications précédentes, un fluide (60) étant rempli dans le dispositif d'écoulement (14, 14a-b) de manière telle que le fluide forme une interface (62) avec un fluide adjacent et les substances chirales ou les éléments support chiraux (64) et le fluide (60) étant adaptés les uns aux autres de manière telle que les substances chirales ou les éléments support chiraux sont retenus au niveau de l'interface (62) du fluide par rapport au fluide adjacent.

8. Substrat (12) présentant un ou une multitude de dispositifs d'écoulement (10, 10a-d) selon l'une quelconque des revendications précédentes, disposés dans et/ou sur le substrat.

9. Substrat selon la revendication 8, deux dispositifs d'écoulement (14) étant commutés fluidiquement en série sur et/ou dans le substrat (12).

10. Éléments support chiraux (64), en particulier pour une utilisation avec un dispositif d'écoulement ou un substrat selon l'une quelconque des revendications précédentes, les éléments support chiraux (64) agissant comme structures de piège, qui lient exclusivement ou du moins principalement, dans une étape de liaison, une ou plusieurs molécules chirales à une des chiralités, **caractérisés en ce que** les éléments support chiraux (64) sont remplis, imbibés ou imprégnés d'un agent d'adaptation,
l'agent d'adaptation adaptant la densité des éléments support (64) et étant conçu en tant qu'agent de ballast pour augmenter la densité moyenne d'élément support (64) et de l'agent de ballast par rapport à la densité de l'élément support (64) ou en tant qu'agent de flottaison pour diminuer la densité moyenne de l'élément support (64) et de l'agent de flottaison par rapport à la densité de l'élément support (64) ; et/ou
l'agent d'adaptation adaptant la propriété hydrophile ou hydrophobe des éléments support (64) de manière telle que lors de l'utilisation, au moins une grande partie des éléments support (64) sont retenus au niveau de l'interface d'un fluide support par rapport à un autre fluide support ou une surface solide.

11. Éléments support chiraux (64) pour une utilisation avec un dispositif d'écoulement ou un substrat selon l'une quelconque des revendications précédentes, des molécules chirales étant liées aux éléments support chiraux et la chiralité des molécules correspondant ou correspondant inversement à la chiralité des éléments support.

12. Procédé pour la séparation de substances chirales faisant appel à des éléments support chiraux (64), les éléments support chiraux (64) agissant comme structures de piège, qui lient exclusivement ou du moins principalement, dans une étape de liaison, une ou plusieurs molécules chirales à une des chiralités, **caractérisé en ce que** le procédé présente les étapes de :
mise à disposition (102) d'un mélange chiral d'éléments support (64), séparation (108) du mélange chiral d'éléments support (64) dans une direction d'écoulement, qui forme des écoulements de fluide lévogyres et dextrogyres (L, R) ou dans un dispositif d'écoulement (14, 14a-b) selon l'une quelconque des revendications précédentes,
prélèvement (110) d'éléments support (64) du dispositif d'écoulement de l'écoulement ou d'un des écoulements lévogyres ou dextrogyres (L, R) et mise à disposition (116) de substances chirales présentant une chiralité sélectionnée appariée à la chiralité des éléments supports prélevés du dispositif d'écoulement,
un mélange chiral de substances chirales étant appliqué sur les éléments support (64) et les substances chirales présentant une chiralité appariée à la chiralité des éléments support (64) (chiralité dans le même sens ou dans le sens opposé), se liant aux éléments support et l'application de la substance chirale étant effectuée sur les éléments support
(a) (étape 106) pendant que les éléments support se trouvent sous forme de mélange chiral et avant l'étape de séparation (108) ou
(b) (étape 120) après la séparation du mélange chiral sur les éléments support (108) et le prélèvement des éléments support séparés du dispositif d'écoulement (110).
